# EUROPEAN PATENT SPECIFICATION

(11) **EP 2 143 579 B1**
(45) Date of publication and mention of the grant of the patent: **16.05.2012**
(21) Application number: 08381023.4
(22) Date of filing: 10.07.2008
(51) Int. Cl.: B60J 7/00

(54) **Moveable structural crosspiece for the roof of an automobile vehicle with panoramic windscreen**
Verfahrbare Quertragkomponente für das Dach eines mit einer Panoramawindschutzscheibe versehenen Kraftfahrzeugs
Traverse mobile pour le toit d'un véhicule automobile muni d'un pare-brise panoramique.

(43) Date of publication of application: 13.01.2010
(73) Proprietor: GRUPO ANTOLIN-INGENIERIA, S.A., 09007 Burgos (ES)
(72) Inventor: Del Alamo Arnaiz, Javier, 09003, Burgos (ES); Gonzalez Merino, Ricardo Manuel, 09001, Burgos (ES); Selgas Caceres, Carlos, 09001, Burgos (ES)
(74) Representative: Capitán García, Maria Nuria

(56) References cited:
- EP-A- 1 806 250

## Description

### OBJECT OF THE INVENTION

This invention refers to a moveable structural crosspiece for the roof of an automobile vehicle with panoramic windscreen which incorporates at least one sunshade to protect against sunlight.

Specifically, the invention refers to a moveable structural crosspiece with a simplified configuration which adapts in a simple and economic manner to various vehicle models.

With this objective, the invention describes a simplified configuration for a moveable structural crosspiece for a vehicle roof with panoramic windscreen which is provided with two elements which may be coupled and which form the body of the crosspiece with each of the elements having a differentiated main function, one structural and the other aesthetic.

### BACKGROUND TO THE INVENTION

There is a current trend in the automobile world towards vehicles with large transparent surfaces in the roof area, for the purpose of increasing the user's comfort with new sensations perceived through these transparent surfaces, which were traditionally opaque plated surfaces.

As part of this trend there is a new concept of vehicle known as a panoramic windscreen in which the front transparent surface of the windscreen extends to the vehicle roof, with the traditional upper edge dividing the windscreen from the vehicle roof disappearing.

Independent of the vehicle configuration it is necessary for the user to provide means of protection from sunlight passing through a transparent zone in both frontal and vertical direction.

For the vertical protection various concealment devices are used which are arranged on the transparent surface of the vehicle, the position of which can be fixed by users according to their needs.

Sun shades are provided for protecting the vehicle windscreen from light entering frontally. These sun shades situated in correspondence with the pilot's position and that of the co-pilot respectively, are attached to the crosspiece which separates the windscreen from the vehicle roof in traditional vehicle configurations.

This crosspiece has a structural configuration and receives among others, the forces deriving from the use of sunshades.

In the new configuration of the vehicle of the type with panoramic windscreen, it is necessary to provide a new element which will be provided with at least sunshades, and which is able to support the stresses deriving from its operation. For this reason this new element is required to have a structural function. We may term this element crosspiece.

The document EP 1806250A1 discloses a moveable structural crosspiece for an automobile vehicle roof with panoramic windscreen which comprises:
- a first structural element defined by two surfaces, a first surface and a second surface
- a second aesthetic element which may be coupled to the first element.
- at least one sunshade joined to the first element
in such a way that the first structural element (2):
- is formed by a part manufactured by means of a thermoforming process from molten material which permits integration of elements
- the first surface is provided with a finish such that it provides the first element (with an aesthetic function.

In this prior art document, the structural element is the lower element, mounted beneath the aesthetic element, and includes means of attachment for at least one sunshade.

Another function required of this crosspiece is that it should be aesthetic, as it has two visible faces, that corresponding to the interior of the vehicle and that corresponding to the transparent surface of the roof.

This type of structural crosspiece is additionally moveable along the glass surface of the vehicle roof.

Furthermore, this type of crosspiece may be accompanied by a concealment device which protects the user vertically from sunlight. These concealment devices may be solid to the crosspiece which supports the sunshades in a permanent manner or in an independent manner.

Known moveable structural crosspieces for vehicles are normally provided with three differentiated elements, a central structural body which supports the forces from the connection of functional elements such as sunshades, and two decorative coatings for the aesthetic finish of the crosspiece, situated in each of the main faces of the principal body, with one of the main faces being that situated in correspondence with the vehicle interior, and the other with the transparent surface of the vehicle roof.

The main body of this crosspiece is formed normally by stamped steel plates or by an extruded aluminium profile.

The decorative coating may be made, for example, from plastic material, or woven or non woven fabric.

This type of crosspiece, due to its manufacturing process does not permit the integration of functions which would facilitate mounting of the functional elements, such as sunshades, which are attached to them. Additionally and due to the configuration of the structural body which forms the crosspiece, it is necessary to have two decorative coating elements, one on the upper face and the other on the lower face.

Patents are known, namely EP1747926 and W02006067253, which describe concealment devices for vehicles of the "panoramic windscreen" type which are provided with a moveable structural crosspiece to which sunshades are affixed and which, in addition, serve as pulling bar for the concealment element.

In these patents details are not provided on the configuration of the moveable structural crosspiece in respect of the components which make up its main body. Nevertheless, from the figures it may be noted that these crosspieces form a profile which receives sunshades for their attachment.

In both cases, the concealment element is permanently solid to the crosspiece.

In addition documents 102005061416 and W02008040892 are known, in which concealment devices are shown, formed by a moveable front crosspiece to which the sunshades are attached, and which incorporate additional functions such as consoles, in the case of the German document and formed by a concealment element which can be made independent from the crosspiece.

In these two cases, details are not provided of the configuration of the body which forms the crosspiece. Based on the figures, it is only possible to see the aesthetic surface of the crosspiece situated in the zone of the vehicle interior.

The invention configuration proposes a simplified moveable structural crosspiece with respect to the crosspieces known in current vehicles formed by a central structural element coated on its upper and lower faces in order to facilitate assembly and reduce costs by integrating functions.

Additionally, a configuration is proposed for a structural crosspiece which is valid for various vehicle models without the fact of passing from one vehicle to another presupposing an excessive modification of the crosspiece with the corresponding financial implications that this would normally entail.

### DESCRIPTION OF THE INVENTION

The present invention consists of a simplified configuration for a moveable structural crosspiece for the roof of a vehicle with panoramic windscreen which is provided with two elements which are coupled and which form the body of the crosspiece, with each of the elements having a differentiated main function, one structural and the other aesthetic.

A first aspect of the invention refers to the moveable structural crosspiece for a vehicle with panoramic windscreen which comprises:
- a first upper structural element defined by two surfaces, a first upper surface and a second lower surface
- a second lower aesthetic element which may be coupled to the first upper element
- at least one sunshade joined to the first upper element

In such a way that the first upper structural element:
- is formed by a part manufactured by means of a thermoforming process from melted material which permits integration of elements
- the first upper surface is provided with a finish such that it provides an aesthetic function to the first upper element
- The second lower surface incorporates means of attachment for at least one sunshade.

The first upper structural element has an essentially structural function, it is the element designed to support the stresses deriving from use of the elements which are arranged attached on the crosspiece, in particular the sunshade which is attached directly to the upper structural element through means of attachment integrated in the first upper element.

The second lower element has an essentially aesthetic function, providing an aesthetic finish to the crosspiece. This finish preferably corresponds to the finish of the vehicle interior.

With this configuration of a moveable crosspiece for the transparent surface of a panoramic vehicle roof, it is possible to simplify the structure of the conventional crosspieces, since the number of parts which make up the body of the crosspiece is reduced, so that a structure of three parts, two parts with aesthetic finish and one with a structural function becomes a two part crosspiece in such a way that one of the parts has two functions, a main structural function and an aesthetic function.

Additionally, and due to the manufacturing process used for the manufacture of the first upper element, the integration of various elements is permitted forming a single piece with this first element thus reducing the number of references to be used to form the crosspiece.

As has been described above, the main structural responsibility is associated with the first upper element which forms the crosspiece. This implies that this first element is the most complex part, and consequently the most expensive part of the crosspiece structure. The aesthetic responsibility is associated with the second lower element, the function of which is essentially aesthetic, and therefore its configuration is simple, converting this second element into a reduced cost part compared to the first upper element.

The first upper element may be used for different vehicle models so that by simply modifying the second lower element which forms the crosspiece, with this being the part which in each case adapts to the aesthetic of the vehicle interior, a crosspiece is obtained which is valid for various vehicle models.

### DESCRIPTION OF THE DRAWINGS

The present descriptive report is complemented by a set of plans illustrating a preferred embodiment of the invention, but which is in no way restrictive.
Figure 1 shoes a perspective view of the crosspiece.
Figure 2 shows two perspectives of the upper element seen from its first upper surface and seen from its second lower surface respectively.
Figure 3 represents two details in perspective of the sunshade attachments to the first upper element.
Figure 4 represents a detail in perspective of the attachment of the blocking device to the first upper element.
Figure 5 shows two perspectives of the second lower element seen from its first upper surface and seen from its second lower surface respectively.
Figure 6 shows two diagram sections of the second lower element, one without decorative coating and another with decorative coating.
Figure 7 shows a diagram view of the combination of the crosspiece with a concealment device.
Figure 8 shows a perspective view of the crosspiece forming a first modular arrangement with the concealment device.
Figure 9 shows a perspective view of a second modular arrangement formed by the concealment device, the crosspiece and the rails mounted on a roof panel.
Figure 10 shows a perspective view of a third modular arrangement formed by the concealment device, the crosspiece and the rails mounted on a vehicle panoramic windscreen.

### PREFERRED EMBODIMENT OF THE INVENTION

In view of the foregoing description, the present invention refers to a moveable structural crosspiece for a vehicle roof with panoramic windscreen which is provided with two elements which are coupled and which form the body of the crosspiece, with each of the elements having a differentiated main function, one structural and the other aesthetic.

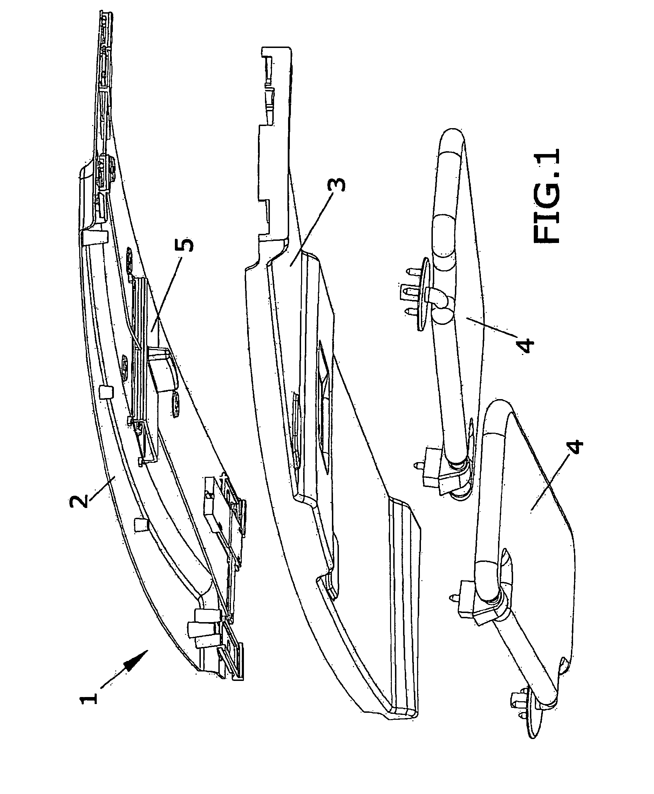

Figure 1 shows a perspective view of the crosspiece (1).

The crosspiece (1) is formed by two coupled elements (2 and 3) which form the main element of the crosspiece, a first upper element (2) and a second lower element (3).

The first upper element (2) receives the second lower element (3) which couples to the first (2). The sunshades (4) are joined directly to the first upper element (2), with this receiving all the stresses deriving from the use of the sunshades (4).

The second lower element (3) is situated between the first upper element (2) and the sunshades (4) in such a way that this second lower element (3) is provided with holes which permit fixation of the sunshades to the first upper element (2).

The crosspiece (1) includes a blocking device (5), for example, in the event that the activating mechanism of this crosspiece (1) is manual for the purpose of avoiding undesirable movements of the across-piece (1) caused by, for example, a sharp braking of the vehicle.

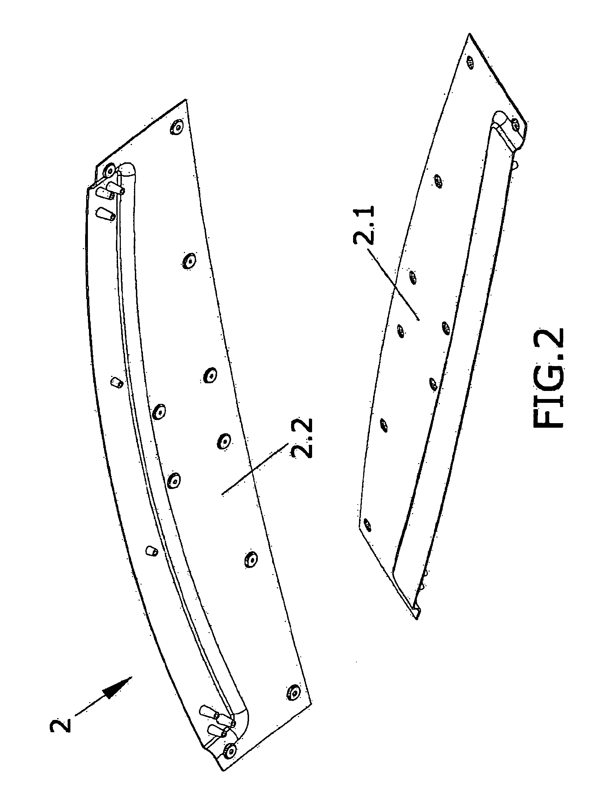

Figure 2 shows two perspectives of the first upper element (2) seen from its first upper surface (2.1) and seen from its second lower surface (2.2) respectively.

The first upper structural element (2) has an essentially structural function, it is the element designed to support the stresses deriving from use of the elements which are arranged fixed to the crosspiece, in particular the sunshades (4) which are fixed directly to the first upper element (2). Additionally, the first upper element (2) has an aesthetic function.

This first upper element (2) is provided with two main surfaces, a first upper surface (2.1) and a second lower surface (2.2).

The first upper surface (2.1) is visually accessible by the user, due to the fact that it is situated in correspondence with the transparent surface of the panoramic windscreen. Therefore, the first function of the first upper structural element (2) is the aesthetic function. Thus the first upper surface (2.1) of the first upper structural element (2) complies with the requirement of a good aesthetic finish.

The second lower surface (2.2) of the first upper element (2), is situated in correspondence with the second lower element (3) which constitutes the crosspiece (1) which is the object of the invention. Therefore, this second lower surface (2.2) of the first upper element (2), is concealed by this second lower element (3). This means that this second surface (2.2) does not have an aesthetic function.

The second lower surface (2.2) is provided with various integrated elements such as the attachment zones (2.2.1) of the sunshades, the attachment zones (2.2.2) for coupling the second lower element, means of attachment (2.2.3) for other elements arranged in the crosspiece such as the blocking device (5), and could include ribs for reinforcing the first upper element (2).

The first upper structural element (2) is manufactured by means of a thermoforming a procedure for molten material. In this procedure the molten material is placed in a mould with a pressure higher than atmospheric pressure.

This type of process, permits integration of complex geometries forming an integral part of the piece which, through other procedures such as stamping for example, are not permitted.

The thermoforming procedures used could, for example, be an injection process or a thermoforming procedure combined with an injection process.

The materials used for manufacture of this first upper structural element could be light metal alloys such as magnesium or aluminium, or plastic materials.

Taking into account that the first upper element (2) is required to comply with the aforementioned structural needs, a complex part is obtained in terms of its geometry, due to the integration of reinforcements which stiffen this first upper element (2) in respect of materials to be used, since it is necessary to use plastic or metal materials which are able to convert this first upper element (2) to a structural part or to a combination of the design of the part and material used for its manufacture.

In any case, due to these requirements, the value of this part will always be greater than that of the second lower part (3), the function of which is essentially aesthetic.

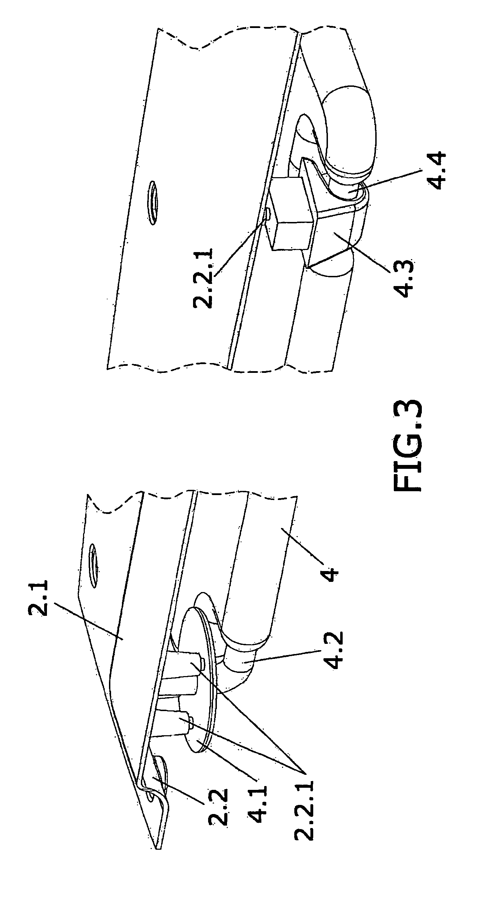

Figure 3 represents two details in perspective of the sunshade (4) attachments to the first upper element (2).

Normally the sunshades (4) are provided with two zones of attachment to the vehicle, one which is permanent through the bracket (4.1) and one which is dismountable through the support (4.3) of the lower axis (4.4) of the sunshade (4).

The permanent attachment permits rotation of the sunshade (4) around a horizontal axis for frontal protection and round a vertical axis for lateral protection. As mentioned above, this permanent attachment is carried out through a first attachment means in the form of a bracket (4.1). This attachment is situated in connection with the sunshade (4) through an elbowed axis (4.2) which emerges from the bracket (4.1) up to the sunshade body (4) where it is housed.

The temporary attachment through the smaller axis (4.4) in combination with its support (4.3) is designed to stabilise the position of the upper edge of the sunshade (4) for frontal protection.

The attachment zones of this sunshade (4) through the bracket (4.1) and the support (4.3) of the smaller axis are required to support stress requirements deriving from their elevated use and which the client notes through the specifications. Therefore the sunshades (4) should be joined to a structural element able to support these stresses.

In the case of the crosspiece (1) in this invention, the element which supports these stresses is the first upper element (2) therefore the attachment zones of the sunshades (4) are situated in this element (2).

In order to carry out these attachments, the first upper element (2), is provided with housings (2.2.1) integrated in their second lower surface (2.2) in the form of turrets (2.2.1) with an interior thread which permits attachment through screws, for example, of both the sunshade (4) bracket (4.1) and the support (4.3) of the smaller axis (4.4) thereof.

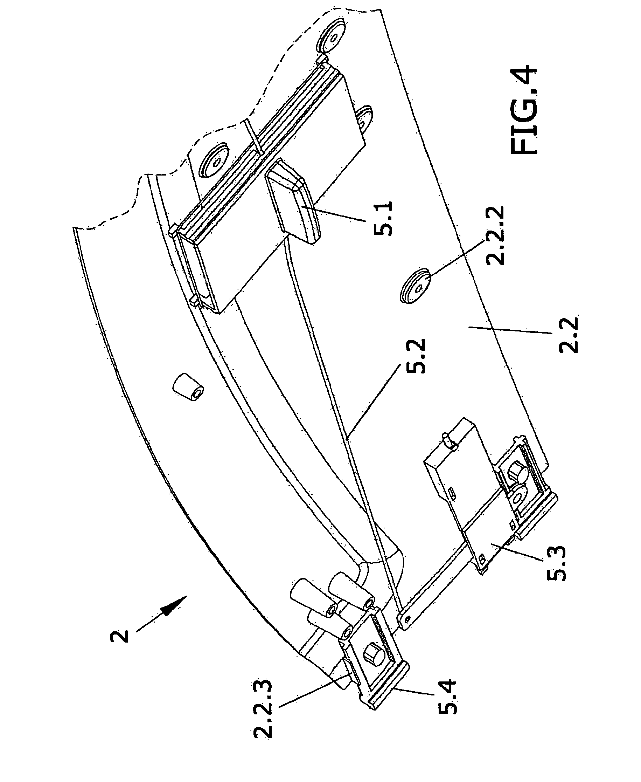

Figure 4 represents a detail in perspective of the blocking device (5) connection to the first upper element (2).

In cases in which the activation of the crosspiece (1) is manual, it is necessary to provide a blocking device (5) which will maintain the crosspiece (1) in a blocked position in order to prevent undesirable movements thereof.

The blocking mechanism (5) comprises blocking means (5.3) which act by exercising pressure on the guide means (9) of the crosspiece (1), thus preventing movement of the sliding means (5.4) associated with the crosspiece (1).

In order to unblock the blocking means (5.3) an activation control (5.1) is used connected to the blocking means (5.3) through a cable (5.2).

This activation device (5) is provided with attachment means for its housing in the crosspiece (1) integrated in the first upper element (2) in the form of the turrets (2.2.2).

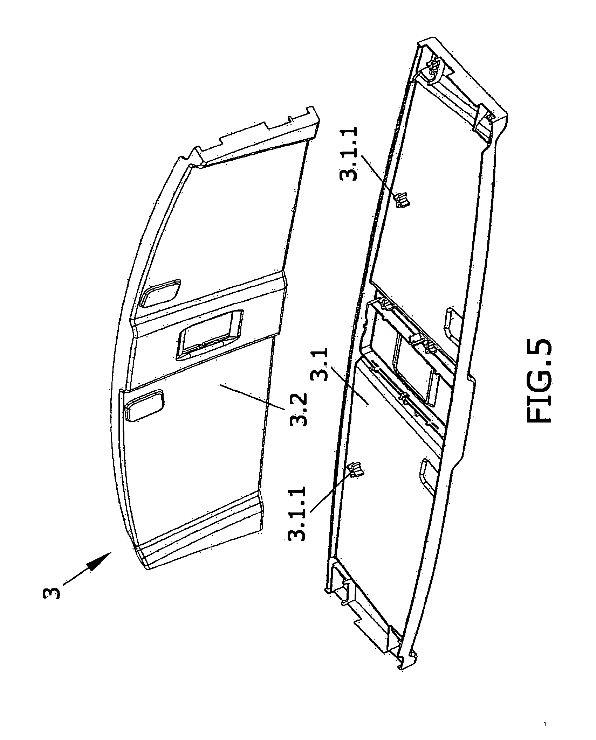

Figure 5 shows two perspectives of the second lower element (3) seen from its first upper surface (3.1) and seen from its second lower surface (3.2) respectively.

The second lower element (3) closes the body forming the crosspiece (1) in the lower part thereof, so that it is situated in correspondence with the second lower surface (2.2) of the first upper structural element (2) through its first upper surface (3.1) and with the interior of the vehicle through a second lower surface (3.2).

The second lower element (3) has an essentially aesthetic function, providing an aesthetic finish to the crosspiece (1). This finish preferably corresponds to the finish of the vehicle interior.

This second lower element (3) includes various housings for the elements which are attached to the crosspiece (1) in particular on the first upper structural element (2). These housings are situated in correspondence with the attachments of the sunshades (4) and the blocking device for example.

In addition, other types of accessories may be incorporated such as consoles for housing small objects and/or lighting devices (not represented).

The first upper surface (3.1) of the second lower element (3) is situated in correspondence with the second lower surface (2.2) of the first upper element (2) therefore, in this surface it is also possible to integrate attachment means (3.1.1) for joining the first upper element (3) and the second lower element (2). These attachment means (3.1.1) are situated in correspondence with the attachment means (2.2.2) integrated in the first upper element (2) in order to establish the connection between both elements (2 and 3).

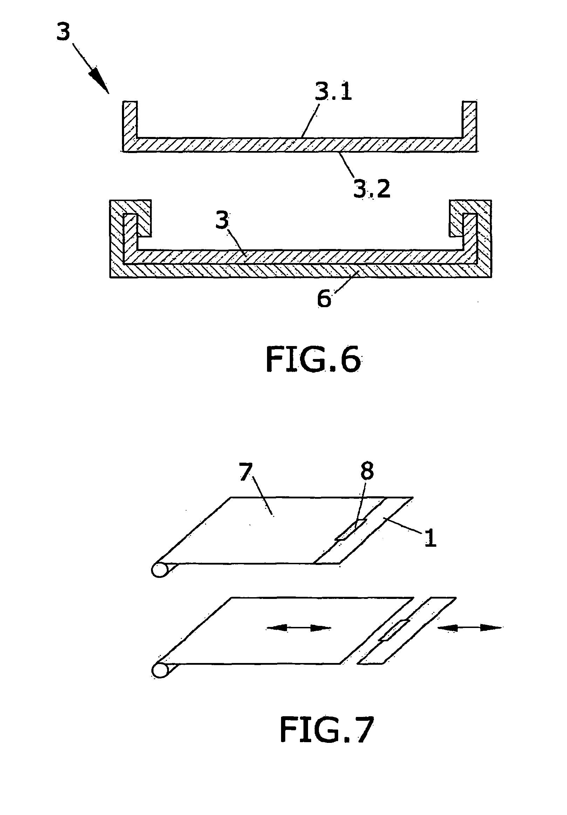

Figure 6 shows two diagram sections of the second lower element (3), one without decorative coating and another with decorative coating (6).

In order to obtain the aesthetic finish of the second lower element (3), it is possible to provide a decorative coating (6) formed by a woven fabric , or non woven, or a non woven fabric or conversely, it may be provided without any decorative coating, in this case providing an engraved surface which enhances its finish.

Figure 7 shows a diagram view of the combination of the crosspiece (1) with a concealment device (7).

The crosspiece (1) may be accompanied in its back part by a concealment device (7) for the vertical protection of the panoramic windscreen of the vehicle.

This concealment device (7), may comprise a flexible sheet of the roll up curtain type, or at least a panel which may be rigid, or semi rigid.

The connection between the crosspiece (1) and the concealment device (7) may be permanent, so that when the crosspiece is moved (1) which acts as a pulling bar for the concealment device (7) the concealment device (7) is displaced.

The connection between these two elements (1 and 7) may also be made independent in such a way that through the connection means (8) users may move the crosspiece and the concealment device (7) independently according to their needs in the event that the elements (1 and 7) are not connected, or jointly in the event that the two elements are in fact connected.

The activation of both the concealment device (7) and the crosspiece (1) may be electric or may be manually activated, and in the event that these elements can be made independent, a manual activation could be combined with a motorised one.

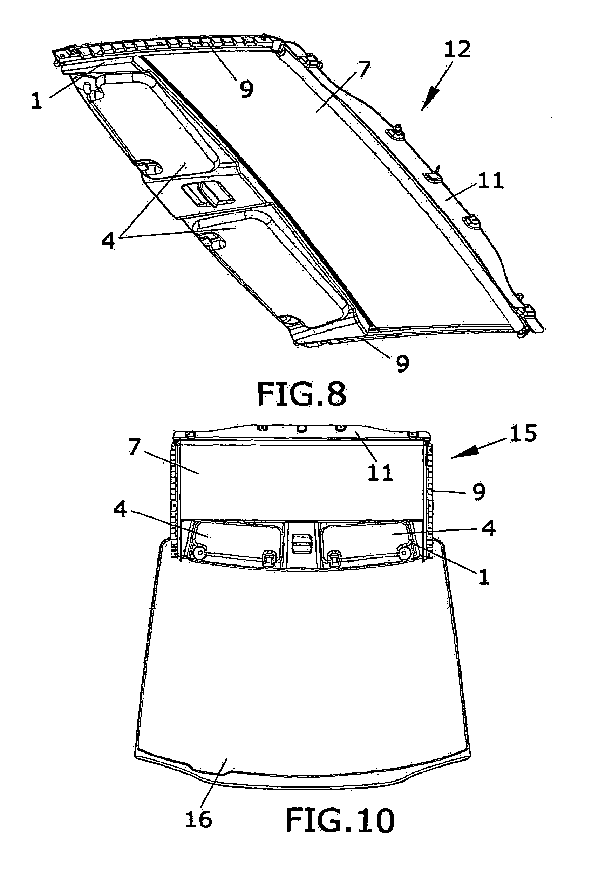

Figure 8 shows a perspective view of the crosspiece (1) forming a first modular arrangement (12) with the concealment device (7).

The first modular arrangement (12) is formed by at least the crosspiece (1), the concealment device (7), a back support element (11) and the guide rails (9). The guide rails (9) and the back support (11) are arranged to form a frame onto which the concealment device (7) and the crosspiece (1) are mounted.

This first modular arrangement (12)is self supporting, that is, this modular arrangement (12) is able to support the stresses deriving from handling during transport, as well as during mounting operations on the vehicle.

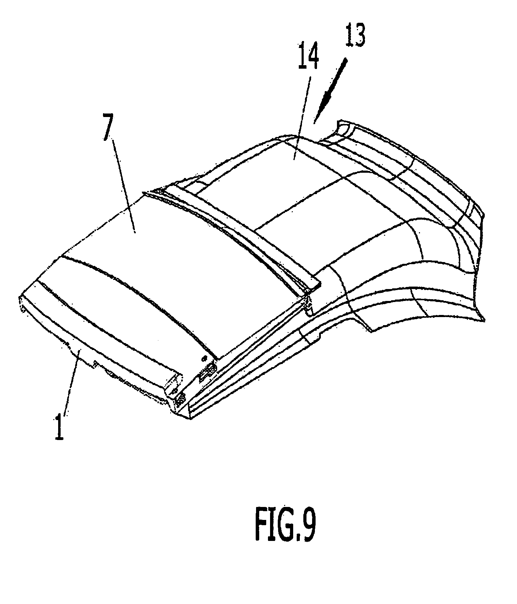

Figure 9 shows a perspective view of a second modular arrangement (13) formed by the concealment device (7), the crosspiece (1) and the rails (9) mounted on a roof panel (14).

In order to configure this second modular arrangement (13) the concealment device (7), the crosspiece (1) and the rails (9) may be connected in an isolated manner on the panel(14); or in a joint manner for example, through the first modular arrangement (12) which in a subsequent operation is mounted on the roof panel (14) in order to form the second self supporting modular arrangement (13) which shall be mounted on the vehicle roof.

The connection means used to fix the modular arrangement on the vehicle roof may be screwed on, riveted, clipped, joined with adhesive etc or a combination of these attachment means.

Figure 10 shows a perspective view of a third modular arrangement (15) formed by the concealment device (7), the crosspiece (1) and the rails (9) mounted on a vehicle panoramic windscreen (16).

In this case, in order to form the third modular arrangement (15) the concealment device (7), the crosspiece (1) and the rails (9) are arranged on the vehicle panoramic windscreen (16).

In the same way as in the previous case, the second modular arrangement (13), the elements (1, 7 and 9) may mounted separately on the panoramic windscreen (16) or forming a first modular arrangement (12) which in a subsequent operation is mounted on the panoramic windscreen (16).

The essential nature of this invention is not altered by any variations in materials, form, size and arrangement of its component elements, described in a non-restrictive manner, with this being sufficient to proceed to its reproduction by an expert.

## Claims

1. Moveable structural crosspiece for an automobile vehicle roof with panoramic windscreen which comprises:
- a first upper structural element (2)defined by two surfaces, a first upper surface (2.1) and a second lower surface (2.2)
- a second lower aesthetic element (3) which may be coupled to the first upper element (2).
- at least one sunshade (4) joined to the first upper element
in such a way that the first upper structural element (2) :
- is formed by a part manufactured by means of a thermoforming process from molten material which permits integration of elements
- the first upper surface (2.1) is provided with a finish such that it provides the first upper element (2) with an aesthetic function
- the second lower surface (2.2) incorporates means of attachment (2.2.1) for at least one sunshade.

2. Moveable structural crosspiece for automobile vehicle roof with panoramic windscreen according to claim 1, **characterised in that** the second lower surface (2.2) of the first upper element (2) incorporates attachment means (2.2.2) for coupling the second lower element (3) with the first upper element (2).

3. Moveable structural crosspiece for automobile vehicle roof with panoramic windscreen according to claim 1 **characterised in that** the crosspiece (1) incorporates a blocking device housed between the first upper element (2) and the second lower element (2).

4. Moveable structural crosspiece for automobile vehicle roof with panoramic windscreen according to claim 3 **characterised in that** the second lower surface (2.2) of the first upper element (2) incorporates attachment means (2.2.3) for attaching the blocking device (5).

5. Moveable structural crosspiece for the roof of an automobile vehicle with panoramic windscreen according to claim 1, **characterised in that** the second lower element (3) is provided with a decorative coating (6).

6. Moveable structural crosspiece for automobile vehicle roof with panoramic windscreen according to claim 1 **characterised in that** the crosspiece (1) is joined at its back edge to a concealment device (7).

7. Moveable structural crosspiece for automobile vehicle roof with panoramic windscreen according to claim 6 **characterised in that** the connection between the crosspiece (1) and the concealment device (7) can be independent and is carried out through connection means (8).

8. Moveable structural crosspiece for automobile vehicle roof with panoramic windscreen according to claims 6 or 7 **characterised in that** the concealment device (7) is formed by a flexible panel of the roll up curtain type, by a rigid panel or by a semi rigid panel.

9. Moveable structural crosspiece for an automobile vehicle roof with panoramic windscreen according to claims 6 or 7 **characterised in that** the concealment device (7) is formed by at least one panel.

10. Moveable structural crosspiece for automobile vehicle roof with panoramic windscreen according to claim 6, **characterised in that** the crosspiece (1) and the concealment device (7) together with guide means (9) and a back support element (11) are arranged to form an initial self supporting modular arrangement (12).

11. Moveable structural crosspiece for automobile vehicle roof with panoramic windscreen according to claim 10 **characterised in that** said initial modular arrangement (12) is arranged joined to a roof panel (14) in order to form a second modular arrangement (13).

12. Moveable structural crosspiece for automobile vehicle roof with panoramic windscreen according to claim 10 **characterised in that** said initial modular arrangement (12) is arranged joined to a panoramic windscreen (16) in order to form a third modular arrangement (15).

13. Moveable structural crosspiece for automobile vehicle roof with panoramic windscreen according to claim 6, **characterised in that** at least the crosspiece (1), the concealment device (7), guide means (9) and a back support crosspiece (11) are arranged separately on the roof panel (14) in order to form, together with this panel (14) a fourth modular arrangement.

14. Moveable structural crosspiece for automobile vehicle roof with panoramic windscreen according to claim 6, **characterised in that** at least the crosspiece (1), the concealment device (7), guide means (9) and a back support crosspiece (11) are arranged separately on a panoramic windscreen (16) in order to form, together with this panoramic windscreen (16) a fifth modular arrangement.

15. Moveable structural crosspiece for automobile vehicle roof with panoramic windscreen according to claims 6 or 7, **characterised in that** the crosspiece (1) is manually activated.

16. Moveable structural crosspiece for automobile vehicle roof with panoramic windscreen according to claims 6 or 7, **characterised in that** the crosspiece (1) is provided with electric activation means.

17. Vehicle comprising a vehicle roof which comprises a moveable crosspiece (1) according to any of the previous claims.

## Patentansprüche

1. Bewegliches strukturelles Querstück für Automobildach mit Panorama-Windschutzscheibe, bestehend aus
- einem ersten oberen Strukturelement (2), das zwei Flächen umfasst, eine erste obere Fläche (2.1) und eine zweite untere Fläche (2.2),
- einem zweiten unteren, aus ästhetischen Gründen angebrachten Element (3), das sich mit dem ersten oberen Element (2) verbinden lässt, und
- mindestens einem, am ersten oberen Element angebrachten Sonnenschutz (4),
**dadurch gekennzeichnet, dass** das erste obere Strukturelement (2)
- ein aus geschmolzenem Material durch Thermoformung hergestelltes Teil Ist und das Anbringen von Elementen gestattet,
- eine erste obere Fläche (2,1) besitzt, deren Oberflächenverarbeitung eine ästhetische Funktion für das erste obere Element (2) erfüllt,
- eine zweite untere Fläche (2.2) besitzt, die Befestigungsmittel (2.2.1) für mindestens einen Sonnenschutz umfasst.

2. Bewegliches strukturelles Querstück für Automoblldach mit Panorama-Windschutzscheibe gemäß Anspruch 1, **dadurch gekennzeichnet, dass** an der zweiten unteren Fläche (2.2) des ersten oberen Elements (2) Befestigungsmittel (2.2.2) zur Verankerung des zweiten unteren Elements (3) am genannten Element (2) angebracht sind.

3. Bewegliches strukturelles Querstück für Automobildach mit Panorama-Windschutzscheibe gemäß Anspruch 1, **dadurch gekennzeichnet, dass** das Querstück (1) eine Verriegelungsvorrichtung umfasst, die zwischen dem ersten oberen Element (2) und dem zweiten unteren Element (3) untergebracht Ist.

4. Bewegliches strukturelles Querstück für Automobildach mit Panorama-Windschutzscheibe gemäß Anspruch 3, **dadurch gekennzeichnet, dass** an der zweiten unteren Fläche (2.2) des ersten oberen Elements (2) Befestigungsmittel (2,2,3) zur Verankerung der Verrlegelungsvorrichtung (5) angebracht sind.

5. Bewegliches strukturelles Querstück für Automobildach mit Panorama-Windschutzschelbe gemäß Anspruch 1, **dadurch gekennzeichnet, dass** das zweite untere Element (3) mit einer dekorativen Beschichtung (6) versehen ist.

6. Bewegliches strukturelles Querstück für Automobildach mit Panorama-Windschutzschelbe gemäß Anspruch 1, **dadurch gekennzeichnet, dass** das Querstück (1) an seiner hinteren Kante mit einer Verbergungsvorrichtung (7) verbunden ist.

7. Bewegliches strukturelles Querstück für Automobildach mit Panorama-Windschutzscheibe gemäß Anspruch 6, **dadurch gekennzeichnet, dass** die Verbindung von Querstück (1) und Verbergungsvorrichtung (7) unabhängig sein kann und durch Verbindungsmittel (8) hergestellt wird.

8. Bewegliches strukturelles Querstück für Automobildach mit Panorama-Windschutzschelbe gemäß Anspruch 6 oder 7, **dadurch gekennzeichnet, dass** die Verbergungsvorrichtung (7) aus einer flexiblen Platte der Art eines zusammenrollbaren Vorhangs oder einer stelfen oder halbstelfen Platte besteht.

9. Bewegliches strukturelles Querstück für Automobildach mit Panorama-Windschutzscheibe gemäß Anspruch 6 oder 7, **dadurch gekennzeichnet, dass** die Verbergungsvorrichtung (7) aus mindestens einer Platte besteht.

10. Bewegliches strukturelles Querstück für Automobildach mit Panorama-Windschutzscheibe gemäß Anspruch 6, **dadurch gekennzeichnet, dass** das Querstück (1) und die Verbergungsvorrichtung (7) zusammen mit Fuhrungsmitteln (9) und einem hinteren Stützelement (11) derart angeordnet sind, dass sie eine sich selbst stützende anfängliche modulare Anordnung (12) bilden,

11. Bewegliches strukturelles Querstück für Automobildach mit Panorama-Windschutzscheibe gemäß Anspruch 10, **dadurch gekennzeichnet, dass** die genannte anfängliche modulare Anordnung (12) an einer Dachplatte (14) befestigt ist, sodass beide zusammen eine zweite modulare Anordnung (13) bilden.

12. Bewegliches strukturelles Querstück für Automoblldach mit Panorama-Windschutzscheibe gemäß Anspruch 10, **dadurch gekennzeichnet, dass** die genannte anfängliche modulare Anordnung (12) derart an einer Panorama-Windschutzscheibe (16) befestigt ist, dass beide zusammen eine dritte modulare Anordnung (15) bilden.

13. Bewegliches strukturelles Querstück für Automobildach mit Panorama-Windschutzscheibe gemäß Anspruch 6, **dadurch gekennzeichnet, dass** mindestens das das Querstück (1), die Verbergungsvorrichtung (7), die Führungsmittel (9) und das hintere Stützelement (11) separat an der Dachplatte (14) angeordnet sind und zusammen mit dieser Platte (14) eine vierte modulare Anordnung bilden.

14. Bewegliches strukturelles Querstück für Automobildach mit Panorama-Windschutzscheibe gemäß Anspruch 6, **dadurch gekennzeichnet, dass** mindestens das Querstück (1), die Verbergungsvorrichtung (7), die Führungsmittel (9) und das hintere Stützelement (11) separat an der Panorama-Windschutzscheibe (16) angeordnet sind und so zusammen mit dieser Windschutzscheibe (16) eine fünfte modulare Anordnung bilden.

15. Bewegliches strukturelles Querstück für Automobildach mit Panorama-Windschutzscheibe gemäß Anspruch 6 oder 7, **dadurch gekennzeichnet, dass** man das Querstück (1) manuell betätigt.

16. Bewegliches strukturelles Querstück für Automobildach mit Panorama-Windschutzscheibe gemäß Anspruch 6 oder 7, **dadurch gekennzeichnet, dass** das Querstück (1) mit elektrischen Betätigungsmitteln ausgestattet ist.

17. Fahrzeug mit einem Dach, das ein bewegliches Querstück (1) gemäß einem bellebigen vorangehenden Anspruch umfasst.

## Revendications

1. Entretoise structurale mobile pour un toit de véhicule automobile avec pare-brise panoramique qui comprend :
- un premier élément structural supérieur (2) défini par deux surfaces, une première surface supérieure (1.1) et une deuxième surface inférieure (2.2),
- un deuxième élément esthétique inférieur (3) qui peut être accouplé au premier élément supérieur (2),
- au moins un parasol (4) uni au premier élément supérieur de manière que le premier élément structural supérieure ;
- est formé par une partie fabriquée par le biais d'un procédé de thermoformage de matière fondue qui permet l'intégration d'éléments,
- la première surface supérieure (2.1) est pourvue d'une finition de manière qu'elle fournit au premier élément supérieur (2) une fonction esthétique,
- la deuxième surface inférieure (2.2) incorpore des moyens de fixation (2.2.1) pour au moins un parasol.

2. Entretoise structurale mobile pour toit de véhicule automobile avec pare-brise panoramique selon la revendication 1, **caractérisée en ce que** la deuxième surface inférieure (2.2) du premier élément supérieur (2) incorpore des moyens de fixation (2.2.2) pour accoupler le deuxième élément inférieur (3) au premier élément supérieur (2).

3. Entretoise structurale mobile pour toit de véhicule automobile avec pare-brise panoramique selon la revendication 1, **caractérisée en ce que** l'entretoise (1) incorpore un dispositif de verrouillage logé entre le premier élément (2) et le deuxième élément inférieur (2).

4. Entretoise structurale mobile pour toit de véhicule automobile avec pare-brise panoramique selon la revendication 3, **caractérisée en ce que** la deuxième surface inférieure (2.2) du premier élément supérieur (2) incorpore des moyens de fixation (2.2.3) pour fixer le dispositif de verrouillage (5).

5. Entretoise structurale mobile pour toit de véhicule automobile avec pare-brise panoramique selon la revendication 1, **caractérisée en ce que** le deuxième élément inférieur (3) est pourvu d'un revêtement décoratif (6).

6. Entretoise structurale mobile pour toit de véhicule automobile avec pare-brise panoramique selon la revendication 1, **caractérisée en ce que** l'entretoise (1) est unie au niveau de son bord arrière à un dispositif de dissimulation (7).

7. Entretoise structurale mobile pour toit de véhicule automobile avec pare-brise panoramique selon la revendication 6, **caractérisée en ce que** la connexion entre l'entretoise (1) et le dispositif de dissimulation (7) peut être indépendante et elle est effectuée par des moyens de connexion (8),

8. Entretoise structurale mobile pour toit de véhicule automobile avec pare-brise panoramique selon les revendications 6 ou 7, **caractérisée en ce que** le dispositif de dissimulation (7) est formé par un panneau flexible du type de rideau enroulable, par un panneau rigide ou par un panneau semi-rigide.

9. Entretoise structurale mobile pour toit de véhicule automobile avec pare-brise panoramique selon les revendications 6 ou 7, **caractérisée en ce que** le dispositif de dissimulation (7) est formé par au moins un panneau.

10. Entretoise structurale mobile pour toit de véhicule automobile avec pare-brise panoramique selon la revendication 6, **caractérisée en ce que** l'entretoise (1) et le dispositif de dissimulation (7) conjointement avec des moyens de guidage (9) et un élément de support arrière (11) sont aménagés pour former un aménagement modulaire autoportant initial (12).

11. Entretoise structurale mobile pour toit de véhicule automobile avec pare-brise panoramique selon la revendication 10, **caractérisée en ce que** ledit aménagement modulaire initial (12) est aménagé uni à un panneau de toit (14) afin de former un deuxième aménagement modulaire (13).

12. Entretoise structurale mobile pour toit de véhicule automobile avec pare-brise panoramique selon la revendication 10, **caractérisée en ce que** ledit aménagement modulaire initial (12) est aménagé uni à un pare-brise panoramique (16) afin de former un troisième aménagement modulaire (15).

13. Entretoise structurale mobile pour toit de véhicule automobile avec pare-brise panoramique selon la revendication 6, **caractérisée en ce qu'**au moins l'entretoise (1), le dispositif de dissimulation (7), les moyens de guidage (9) et une entretoise de support arrière (11) sont aménagés séparément sur le panneau de toit (14) afin de former, conjointement avec ce panneau un quatrième aménagement modulaire.

14. Entretoise structurale mobile pour toit de véhicule automobile avec pare-brise panoramique selon la revendication 6, **caractérisée en ce qu'**au moins l'entretoise (1), le dispositif de dissimulation (7), les moyens de guidage (9) et une entretoise de support arrière (11) sont aménagés séparément sur un pare-brise panoramique (16) afin de former, conjointement avec ce pare-brise (16) un cinquième aménagement modulaire.

15. Entretoise structurale mobile pour toit de véhicule automobile avec pare-brise panoramique selon les revendications 6 ou 7, **caractérisée en ce que** l'entretoise (1) est activée manuellement.

16. Entretoise structurale mobile pour toit de véhicule automobile avec pare-brise panoramique selon les revendications 6 ou 7, **caractérisée en ce que** l'entretoise (1) est pourvue de moyens électriques d'activation.

17. Véhicule comprenant un toit de véhicule qui comprend une entretoise mobile (1) selon l'une quelconque des revendications précédentes.
